**Europäisches Patentamt**

**European Patent Office**

**Office européen des brevets**

(11) Veröffentlichungsnummer: **0 059 877**
**B1**

(12) # EUROPÄISCHE PATENTSCHRIFT

(45) Veröffentlichungstag der Patentschrift:
08.05.85

(21) Anmeldenummer: **82101367.9**

(22) Anmeldetag. **24.02.82**

(51) Int. Cl.⁴: **F 16 L 37/12, F 16 L 19/00,**
**F 16 L 33/00, B 60 T 17/04**

(54) **Kupplung für Druckleitungen.**

(30) Priorität: **07.03.81 DE 3108651**

(43) Veröffentlichungstag der Anmeldung:
**15.09.82 Patentblatt 82/37**

(45) Bekanntmachung des Hinweises auf die Patenterteilung:
**08.05.85 Patentblatt 85/19**

(84) Benannte Vertragsstaaten:
**DE FR GB IT**

(56) Entgegenhaltungen:
**CH - A - 318 678**
**DE - A - 1 951 902**
**DE - A - 2 824 943**
**DE - A - 2 853 281**
**DE - A - 2 856 064**
**DE - A - 2 856 069**
**DE - A - 2 912 160**
**DE - B - 1 475 792**

(73) Patentinhaber: **Johannes Schäfer vormals Stettiner Schraubenwerke GmbH & Co. KG, D-6303 Hungen (DE)**

(72) Erfinder: **Funk, Hans Georg, Am Pfahlgraben 4, D-6303 Hungen (DE)**
Erfinder: **Neumann, Frank, Limesstrasse 9, D-6303 Hungen (DE)**
Erfinder: **Schäfer, Dankmar, Stettiner Strasse 57, D-6303 Hungen (DE)**

(74) Vertreter: **Schlee, Richard et al, Patentanwälte Dipl.-Ing. R. Schlee Dipl.-Ing. A. Missling Bismarckstrasse 43, D-6300 Giessen 1 (DE)**

BUNDESDRUCKEREI BERLIN

**Beschreibung**

Die Erfindung bezieht sich auf eine Kupplung für eine Druckleitung, insbesondere für den Anschluß von Druckluftleitungen an Organe einer Druckluftbremse eines Kraftfahrzeuges, mit einem Steckteil mit Durchgangsbohrung, einem Aufnahmeteil mit Durchgangsbohrung und Außengewinde, das in ein Gewindeloch einschraubbar ist und einem elastisch spreizbaren, am Aufnahmeteil angeordneten und in axialer Richtung formschlüssig an diesem fixierten Haltering, der in eine Außennut des Steckteiles eingreift und dadurch diese Teile in axialer Richtung relativ zueinander fixiert.

Als Steckverbindungen ausgebildete Kupplungen haben gegenüber Schraubverbindungen den Vorteil, daß der Anschluß von Leitungen wesentlich erleichtert wird, da anstelle eines oft mühsamen und zeitraubenden Einschraubens an manchmal schwer zugänglichen Stellen ein einziger Griff genügt, um eine Druckleitung anzuschließen. Es ist bereits eine Kupplung der genannten Art bekannt (DE-A1-2 856 069, Fig. 4), bei der das Aufnahmeteil als Adapter ausgebildet ist, der es gestattet, die Kupplung auch an solche Organe, z. B. Bremszylinder, anzubauen, die ein genormtes Gewindeloch für einen Schraubanschluß aufweisen. Bei der bekannten Kupplung befindet sich der Haltering in der Nähe des hinteren Endes des Aufnahmeteiles, wodurch sich eine relativ große Baulänge der Kupplung ergibt.

Der Erfindung liegt die Aufgabe zugrunde, eine Kupplung der eingangs genannten Art so auszubilden, daß eine möglichst geringe Baulänge erzielt wird.

Diese Aufgabe wird nach der Erfindung dadurch gelöst, daß der Haltering, gesehen in Einsteckrichtung, am vorderen Ende des Aufnahmeteiles angeordnet ist, mit einem Haltebereich von außen auf einem gewindelosen, rohrförmigen Fortsatz am vorderen Ende des Einschraubbereichs befestigt ist, wobei sein Verriegelungsbereich das freie Ende des Fortsatzes übergreift und radial nach innen über den Rand der Aufnahmebohrung derart hinaussteht, daß er in gekuppeltem Zustand in eine Außennut am vorderen Ende des Steckteiles eingreift.

Bei einer so ausgebildeten Kupplung durchgreift das Steckteil das Aufnahmeteil über seine gesamte Länge und ist mit dem Aufnahmeteil an dessen vorderem Ende verriegelt. Dadurch erhält man die erwünschte große Führungslänge für das Steckteil, ohne daß das Aufnahmeteil wesentlich über das hintere Ende der Gewindebohrung vortragen muß. Das Aufnahmeteil kann deshalb so ausgebildet weden, daß außerhalb der Gewindebohrung nur ein mit Schlüsselflächen, im allgemeinen sechskantiger, Bereich vorragt.

Die formschlüssige Fixierung des Halteringes im Aufnahmeteil kann auf verschiedene Art und Weise erfolgen. Beispiele hierzu sind in den Ansprüchen 2 bis 6 angegeben. Die Ausführungsformen nach den Ansprüchen 2 und 6 haben den Vorteil, daß das Aufnahmeteil ein einfaches Drehteil ist, an dem außer Drehoperationen keine Bearbeitung erforderlich ist. Die Ausführungsformen nach den Ansprüchen 4 und 5 hingegen haben den Vorteil, daß die lichte Weite des Steckteiles sehr groß gehalten werden kann, da der Durchmesserbereich eingespart wird, der von einer Wand eingenommen wird, die sich am Grunde einer geschlossenen Nut befinden muß.

Besonders vorteilhaft ist die Ausführungsform nach Anspruch 7, da sie eine zusätzliche Sicherheit gegen ein unbeabsichtigtes Loslösen des Steckteiles bietet. Der Haltering nämlich kann sich infolge seiner Abstützung an der Gewindebohrung nicht so weit aufweiten, daß er aus der Außennut des Aufnahmeteiles oder aus der Außennut des Steckteiles herauswandern kann. Besonders zweckmäßig ist es, gemäß Anspruch 8 den Außendurchmesser des Halteringes etwa gleich dem Innendurchmesser der Gewindebohrung auszuführen.

Bei der Ausführunsform nach Anspruch 9 wird ein billiges Element, nämlich ein elastischer Dichtring, für die axiale Verspannung der Verriegelung ausgenutzt und hat zugleich die Wirkung, daß das Eindringen von Schmutz in den Spaltbereich der Kupplung vermieden wird, d. h. in den Bereich, in dem das Steckteil passend in das Aufnahmeteil hineinragt. Eine dort vorzugsweise angeordnete Dichtung ist deshalb nicht durch Schmutz gefährdet.

Eine besonders effiziente Dichtung erhält man mit einer Dichtungform und einer Form für die Ausnehmung, in der sich die Dichtung befindet, wie sie in den Ansprüchen 10 und 11 angegeben ist. Die Ausführungsform nach Anspruch 12 hat den Vorteil, daß das Steckteil festgehalten werden kann, wenn das Aufnahmeteil herausgeschraubt wird. Man kann Verdrillungen des mit dem Steckteil verbundenen Schlauches damit auch dann vermeiden, wenn sich das Steckteil im Aufnahmeteil festgesetzt hat, z. B. durch die Einwirkung von Spritzwasser, insbesondere salzhaltigem Spritzwasser.

Eine besonders vorteilhafte Ausbildung des Halteringes ist in den Ansprüchen 13 bis 18 angegeben. Spreizflächen gemäß Anspruch 13 erleichtern das Aufweiten des Halteringes. Vorzugsweise sind sowohl am Steckteil als auch am Haltering Spreizflächen angeordnet. Dies ist jedoch nicht zwingend, da auch Spreizflächen an nur einem Teil die Spreizung bereits erleichtern. Die im Anspruch 14 angegebene Querschnittsform erleichtert das Spreizen, da der Ring in dem Bereich, in dem er aufgeweitet werden soll, relativ nachgiebig ist. Ein Schlitz gemäß Anspruch 15 ermöglicht das Einsetzen des Halteringes in das Aufnahmeteil bei geringer Verformung des Halteringes. Wenn die Maßverhältnisse unter Berücksichtigung der Elastizität des Halteringes so sind, daß sich der Haltering durch radiale Ausdehnung am Aufnahmeteil einrasten läßt, kann auch gemäß Anspruch 16 eine Sollbruchstelle vorgesehen werden, die erst dann aufgebrochen wird, z. B. mittels eines Schraubendrehers, wenn der Haltering vom Aufnahmeteil abgenommen werden soll. Durch Schwächungskerben gemäß Anspruch 17 werden nachgiebige Segmente gebildet, die das Einstecken des Steckteiles mit relativ geringem Kraftaufwand ermöglichen.

Der Haltering kann aus verschiedenen Werkstoffen bestehen. Besonders gut geeignet sind thermoplastische Kunststoffe, z. B. der im Anspruch 18 angegebene Kunststoff. Die Verwendung thermoplastischen Kunststoffes gestattet auch die Herstellung des Halteringes als Kunststoff-Spritzteil, welche Art der Herstellung besonders rationell ist.

In der Zeichnung sind Ausführungsbeispiele der Erfindung dargestellt. Es zeigt

Fig. 1 einen diametralen Schnitt durch eine Kupplung gemäß einer ersten Ausführungsform der Erfindung, bei der der Haltering in einer Außennut des Aufnahmeteiles gehalten ist,

Fig. 2 eine Draufsicht auf einen Haltering, der gegenüber Fig. 1 etwas vergrößert ist entsprechend dem Pfeil II in Fig. 3,

Fig. 3 einen diametralen Schnitt durch den Haltering entsprechend der Linie III-III in Fig. 2,

Fig. 4 eine Kupplung gemäß einer zweiten Ausführungsform der Erfindung, bei der der Haltering mit Nasen in Haltebohrungen eingreift,

Fig. 4a eine Draufsicht entsprechend der Linie IVa in Fig. 4 in einem gegenüber Fig. 4 verkleinerten Maßstab,

Fig. 5 eine Draufsicht auf den Haltering, der beim Ausführungsbeispiel nach Fig. 4 verwendet ist,

Fig. 6 einen Schnitt durch den Haltering nach Linie VI-VI in Fig. 5,

Fig. 7 einen Längsschnitt duch eine dritte Ausführungsform der Erfindung, bei der der Haltering durch tangentiale Stege am Aufnahmeteil gehalten ist,

Fig. 8 eine Draufsicht auf den Haltering, der bei der Ausführungsform nach Fig. 7 verwendet ist,

Fig. 9 einen Schnitt durch den Haltering entsprechend der Linie IX-IX in Fig. 8,

Fig. 10 einen diametralen Schnitt durch eine vierte Ausführungsform der Erfindung, bei der der Haltering in mehreren Rillen des Aufnahmeteiles gehalten ist,

Fig. 11 eine Draufsicht auf den Haltering, der bei der Ausführungsform nach Fig. 10 verwendet ist, und

Fig. 12 einen Schnitt durch den Haltering nach Fig. 11 entsprechend der Linie XII-XII in Fig. 11.

Die Hauptbestandteile der Kupplung sind ein Steckteil 1, ein Aufnahmeteil 2 und ein Haltering 3. Das Aufnahmeteil 3 ist in einen Körper 4 eingeschraubt, z. B. in das Gehäuse eines Bremszylinders.

Das Steckteil 1 hat einen Rohransatz 5 für das Aufstecken eines mit strichpunktierten Linien angedeuteten Schlauches 6. Der Rohransatz ist in bekannter Weise mit umlaufenden Rippen 7 versehen, die einen widerhakenförmigen Querschnitt haben, wodurch das Abrutschen des Schlauches 6 vermieden wird.

Unterhalb des Rohransatzes 5 befindet sich ein Flansch 8, dessen Unterfläche 8a im montierten Zustand der Kupplung auf einen elastischen Dichtring 9 drückt. Unterhalb des Flansches 8 befindet sich ein Paßbereich 10, der eine zylindrische Außenfläche 10a hat, die passend in eine zylindrische Bohrung 11 des Aufnahmeteiles 2 eingreift. Im Paßbereich 10 befindet sich eine Außennut 12, in der ein Dichtring 13 aufgenommen ist, der dichtend an der Bohrungswand 11 anliegt.

Am unteren Ende des Paßbereiches 10 befindet sich am Steckteil eine Außennut 14, in die im montierten Zustand der Haltering 3 eingreift. Unterhalb der Außennut hat das Steckteil 1 eine konische Fläche 15, die nach vorne hin (die Endfläche 16 des Steckteiles soll die vordere Endfläche sein) konvergiert.

Das Steckteil hat eine Durchgangsbohrung 17, deren lichte Weite etwa gleich ist wie die lichte Weite des Schlauches 6.

Das Aufnahmeteil 2 hat einen Einschraubbereich 18, der mit einem Außengewinde 19 versehen ist. Nach hinten hin schließt an den Einschraubbereich 18 ein Flansch 20 von relativ großer Dicke an, dessen Außenflächen 20a als Schlüsselflächen ausgebildet sind, nämlich als Sechskant.

An der Unterfläche 20b des Flansches 20 befindet sich eine Ringnut 21, in der eine elastische Dichtung 22 aufgenommen ist, die an der Oberfläche 4a des Körpers 4 anliegt.

Das Einschraubteil 2 hat an seinem hinteren Ende (die obere Endfläche 23 soll die hintere Endfläche sein) eine große Ausnehmung 24, in der der bereits erwähnte elastische Dichtring 9 sitzt. Er liegt an der Unterfläche 24a und an der Umfangsfläche 24b der Ausnehmung 24 an. Andererseits liegt er an der bereits erwähnten Unterfläche 8a des Flansches 8 an und an einer zylindrischen Fläche 25, die sich am Steckteil zwischen dem Flansch 8 und dem Paßbereich 10 befindet.

In der Nähe des vorderen Endes des Aufnahmeteiles 2 befindet sich eine Ringnut 26, in die der Haltering 3 eingreift. Die Nut 26 ist von der vorderen Stirnfläche 27 des Aufnahmeteiles 2 durch eine Wand 28 getrennt, die einen Durchmesser $d_W$ aufweist. Der Durchmesser $d_W$ ist naturgemäß größer als der Durchmesser $d_N$ des Grundes der Nut 26.

Der Haltering 3 ist ein Kunststoff-Spritzteil, das aus einem Stück besteht. Der Querschnitt läßt sich einteilen in einen Haltebereich 29, einen Einschnürungsbereich 30 und einen Verriegelungsbereich 31. Der Haltebereich 29 hat eine zylindrische Außenwand 32 mit einem Durchmesser $d_H$. Der Verriegelungsbereich 31 hat eine vordere ebene Stirnfläche 31a, die zum Zusammenwirken mit der vorderen Wand 14a der Außennut 14 des Steckteiles bestimmt ist. Am Verriegelungsteil 31 befindet sich auch eine konische Fläche 31b, die nach vorne hin konvergent ist und als Einführschräge dient. Der Innendurchmesser $d_E$ des Einschnürungsbereiches 30 ist größer als der Außendurchmesser $d_W$ der Nutwand 28. Zwischen dem Haltebereich 39 und dem Verriegelungsbereich 31 befindet sich eine Nut 33, deren Breite etwa gleich der Dicke der Wand 28 ist. Insgesamt hat der Verriegelungsbereich 31 eine nach vorne hin, also zur Endfläche 31a hin, konvergierende Form.

Der Innendurchmesser des Halteringes an seiner engsten Stelle ist mit $d_i$ bezeichnet. Das Steckteil 1 hat unterhalb der Außennut 14 einen Durchmesser $d_a$, der gleich dem Durchmesser im Paßbereich 10 ist. Der Durchmesser könnte auch etwas kleiner sein, jedoch keinesfalls größer als dieser Durchmesser.

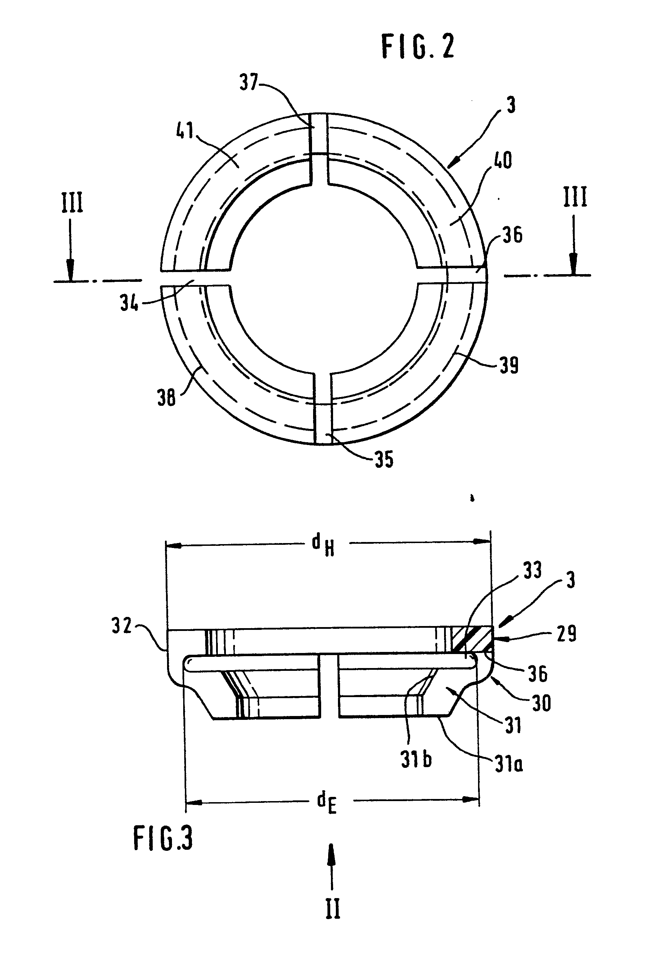

Der Haltering hat einen ihn vollständig durchtrennenden radialen Schlitz 34 und drei Schwächungskerben 35, 36 und 37. Wie man aus Fig. 3 ersehen kann, durchtrennen die Schwächungskerben 36 den Verriegelungsbereich 31 und den Einschnürungsbereich 30, schneiden jedoch den Haltebereich 29 nicht an. Durch den Schlitz 34 und die Kerben 35, 36 und 37 wird der Ring in seinem Verriegelungsbereich 31 in vier Segmente 38, 39, 40 und 41 unterteilt. Diese Segmente lassen sich verhältnismäßig leicht nach außen biegen, da sie nur über den dünnen Einschnürungsbereich 30 mit dem Haltebereich 29 verbunden sind.

Die Wirkungsweise der Kupplung ist wie folgt. Zunächst wird der Aufnahmeteil 2 in eine Gewindebohrung 42 des Körpers 4 angeschraubt. Diese Gewindebohrung kann eine genormte Bohrung sein. Hierbei legt sich der Dichtring 22 dichtend an die Oberfläche 4a des Körpers 4 an. Vor diesem Einschrauben ist der Haltering 3 bereits mit dem Aufnahmeteil 2 verbunden. Die Verbindung wurde dadurch hergestellt, daß der Haltering aufgespreizt wurde, was dank der Durchtrennung am Schlitz 24 leicht möglich ist. Danach hat sich der Ring über den Durchmesser $d_W$ der Wand 28 streifen lassen. Aufgrund seiner Eigenelastizität ist der Haltebereich 29 in die Nut 26 eingerastet. Da der Außendurchmesser $d_H$ des Haltebereiches 29 etwas kleiner ist als der Innendurchmesser $d_G$ des Gewindeloches 42, hat er das Einschrauben auf Aufnahmeteiles nicht behindert.

Der Steckteil läßt sich jetzt durch einfaches Einstecken montieren. Am Steckteil sind die Dichtungen 13 und 9 unverlierbar gehalten. Wenn nun das Steckteil in den Aufnahmeteil 2 eingesteckt wird, wird die Ausrichtung des Paßbereiches 10 auf die Bohrung 11 erleichtert durch die konische Fläche 15 am Steckteil und eine weitere konische Übergangsfläche 43 am Aufnahmeteil 2. Der Haltering 3 wird nun dadurch gespreizt, daß die konische Fläche 15 des Steckteiles an der konischen Fläche 31b des Halteringes zur Anlage kommt und dabei die vier Segmente 38, 39, 40 und 41 aufbiegt. Ein Aufweiten des Ringes so weit, daß dieser aus der Nut 26 herauswandern könnte, ist nicht möglich, da sein Außendurchmesser $d_H$ und der Gewindeinnendurchmesser $d_G$ so aufeinander abgestimmt sind, daß sich der Ring nur wenig (oder eventuell überhaupt nicht) aufweiten läßt, solange das Aufnahmeteil 2 in die Gewindebohrung eingeschraubt ist.

Wenn das Steckteil ganz eingeführt ist, können die Segmente 38 bis 41 in die Nut 14 einrasten. In diesem Zustand ist die Dichtung 9 zusammengepreßt.

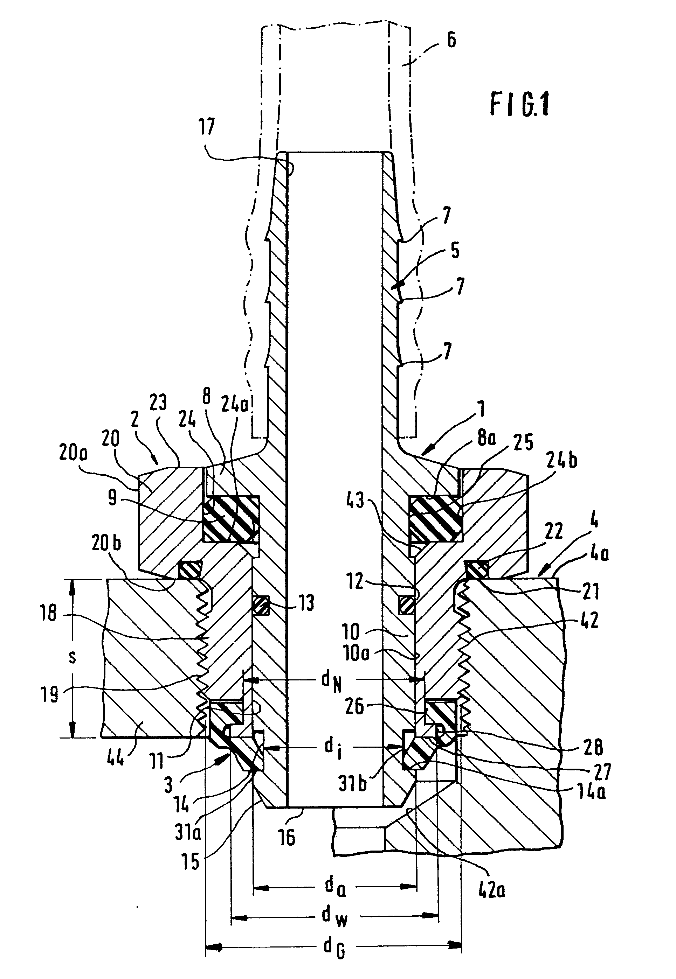

Auch nach Loslassen des Steckteiles bleibt dieses fest verriegelt, wobei die Elastizität der Dichtung 9 das Steckteil in Fig. 1 gesehen nach oben zu drücken versucht. Hierdurch wird die untere Nutwand 14a der Nut 14 fest gegen die Unterfläche 31a des Halteringes 3 gepreßt. Man erhält dadurch einen absolut wackelfreien Sitz, was auch günstig für die Funktion der Dichtung 13 ist.

Ein Lösen der Kupplung ist nur dadurch möglich, daß das Aufnahmeteil 2 herausgeschraubt wird. Im herausgeschraubten Zustand ist der Haltering nicht mehr am Aufweiten gehindert, so daß er so weit aufgeweitet werden kann, daß sich die Segmente 38 bis 41 aus der Nut 14 herausziehen lassen.

In Fig. 1 ist in der rechten Hälfte eine Anschlußbohrung gezeigt, wie sie für Schraubanschlüsse üblich ist. Diese Bohrung hat einen Grund 42a. Die Kupplung ist jedoch auch für das Einschrauben in relativ dünne Wände 44 geeignet, nämlich in Wände, deren Dicke s mindestens so groß ist, daß sich der Haltebereich 29 des Halteringes 3 noch an der Bohrungswand abstützen kann.

Das Steckteil 1 kann auch nach der Kupplung noch gegenüber dem Aufnahmeteil 2 verdreht werden. Dies ist insbesondere von Interesse, wenn das Steckteil winkelförmig ausgebildet ist. Auch solche Ausführungen fallen selbstverständlich in den Bereich der Erfindung.

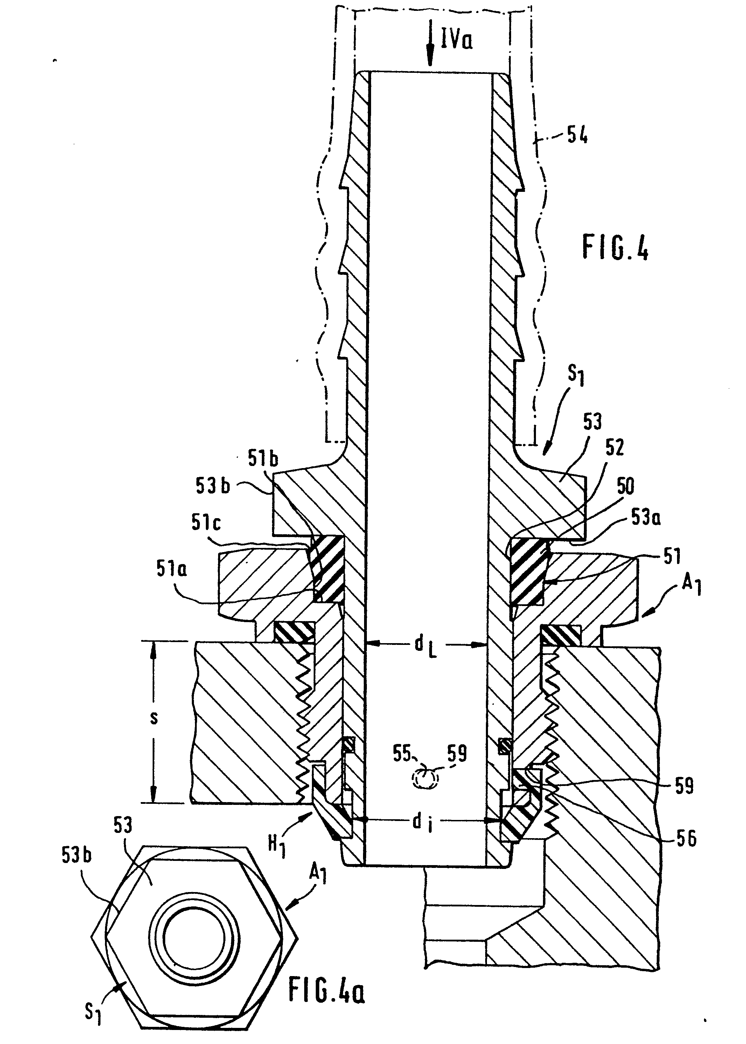

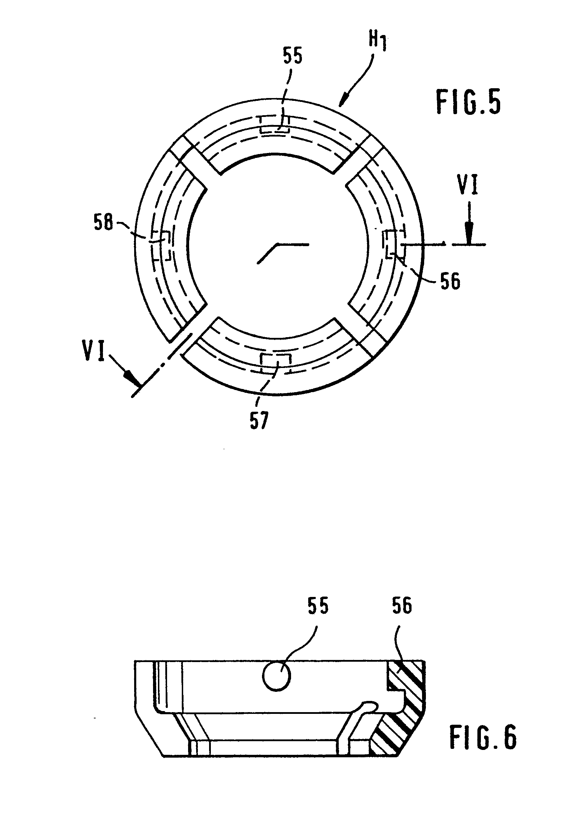

Die Ausführungsform nach den Fig. 4 bis 6 unterscheidet sich von der Ausführungsform nach den Fig. 1 bis 3 bezüglich der Beschaffenheit des oberen Dichtringes (in Fig. 1 mit 9 bezeichnet) und bezüglich der Befestigung des Halteringes. Der Dichtring 50 nach Fig. 4 hat im entspannten Zustand (in Fig. 4 ist der gespannte Zustand dargestellt) einen rechteckigen Querschnitt. Bei eingestecktem Steckteil $S_1$ ist die Dichtung etwas gestaucht und nimmt dann die Form gemäß Fig. 4 ein.

Die Dichtung 50 greift in eine insgesamt mit 51 bezeichnete Ausnehmung ein. Diese Ausnehmung hat einen ebenen Boden 51a, einen hohlzylindrischen Abschnitt 51b und einen hohlkonischen Abschnitt 51c. Der Durchmesser des Abschnittes 51a ist so bemessen, daß die Außenfläche der Dichtung 50 an der Zylinderwand anliegt. Die Innenwand der Dichtung 50 liegt an einer zylindrischen Außenfläche 52 des Steckteiles $S_1$ an.

Ein weiterer Unterschied zu dem Ausführungsbeispiel nach den Fig. 1 bis 3 besteht darin, daß die Fläche 53a, an der die Dichtung 50 an-

liegt, durch einen Bund 53 gebildet ist, der außen Schlüsselflächen 53b aufweist, z. B. als Sechskant ausgebildet ist. Dies hat den Vorteil, daß das Steckteil $S_1$ festgehalten werden kann, wenn das Aufnahmeteil $A_1$ herausgedreht wird. Man vermeidet auf diese Weise Verdrillungen des Schlauches 54.

Der insgesamt mit $H_1$ bezeichnete Haltering hat an seiner Innenseite insgesamt vier Nasen 55 bis 58, die nach innen vorragen. Diese Nasen greifen in vier Löcher 59 ein, die sich am Aufnahmeteil $A_1$ befinden und die an dieser Stelle reduzierte Wand des Aufnahmeteiles vollständig durchgreifen. Im Vergleich mit der Ausführungsform nach den Fig. 1 bis 3 wird damit der Vorteil erreicht, daß die lichte Weite $d_L$ des Steckteiles $S_1$ größer gemacht werden kann. Dieser Effekt beruht darauf, daß die Wanddicke wegfallen kann, die bei der Ausführungsform nach den Fig. 1 bis 3 innerhalb des Grundes der Außennut 26 verbleiben muß.

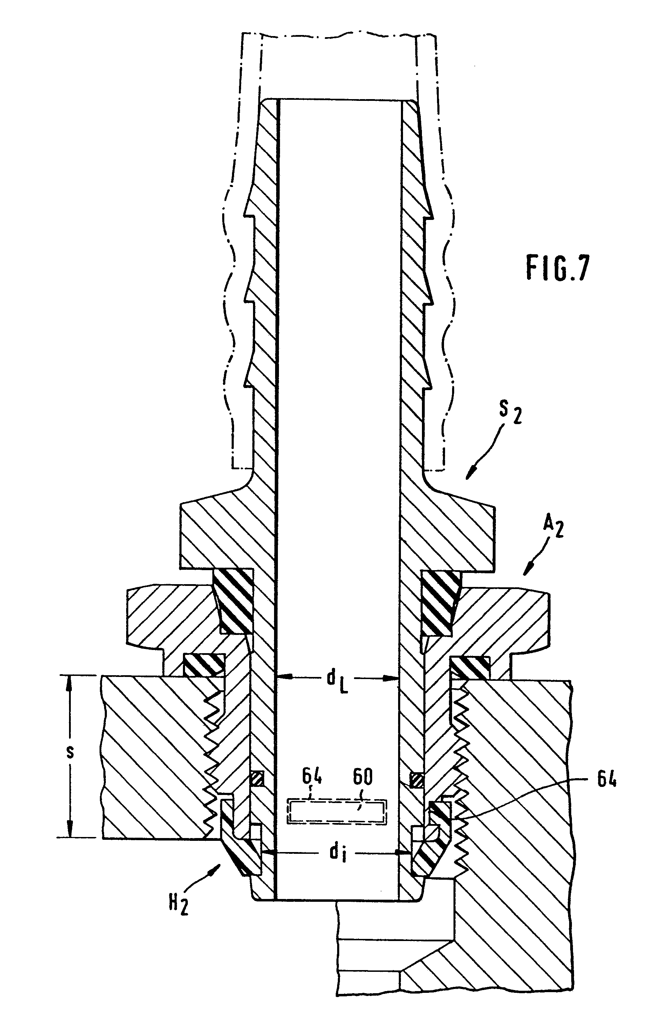

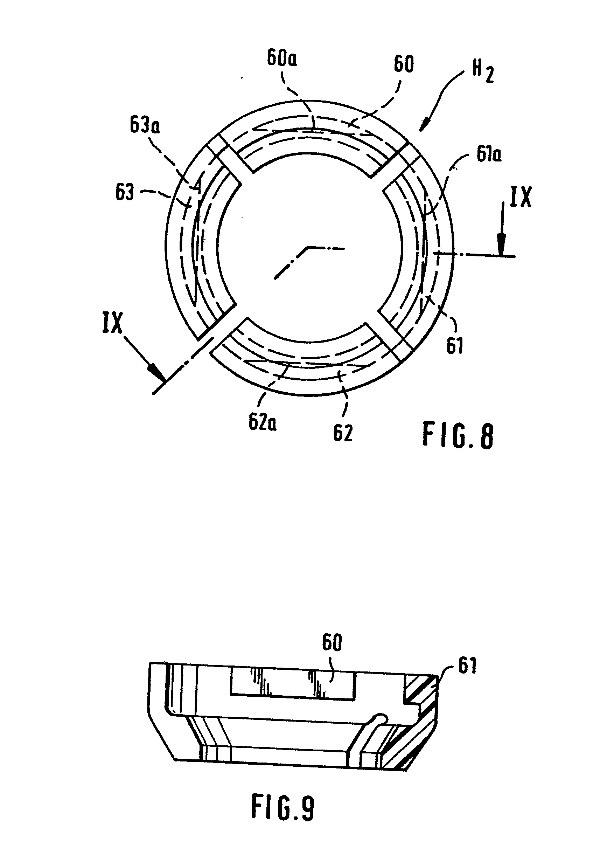

Bei der Ausführungsform nach den Fig. 7 bis 9 ist das Steckteil mit $S_2$, das Aufnahmeteil mit $A_2$ und der Haltering mit $H_2$ bezeichnet. Diese Ausführungsform unterscheidet sich von der Ausführungsform nach den Fig. 4 bis 6 durch die Art und Weise der Befestigung des Halteringes $H_2$. Der Haltering $H_2$ hat (siehe dazu auch Fig. 8 und 9) an seiner Innenseite vier Stege 60 bis 63. Diese Stege haben ebene Flächen 60a bis 63a, wobei diese Flächen benachbarter Stege rechtwinklig zueinander stehen. Die Stege sind also um 90° gegeneinander versetzt.

Im Aufnahmeteil $A_2$ befinden sich vier korrespondierende Nuten 64, in die die Stege eingreifen. Auch mit dieser Konstruktion läßt sich die lichte Weite $d_L$ relativ groß halten, da die geraden Nuten 64 bis annähernd an den Innendurchmesser des Aufnahmeteiles $A_2$ heranreichen können, da ja im Bereich zwischen den Nuten 64 genügend Material übrig bleibt, um den festen Zusammenhalt des unterhalb der Nuten 64 liegenden Bereiches des Aufnahmeteiles $A_2$ mit dem darüberliegenden Bereich zu gewährleisten.

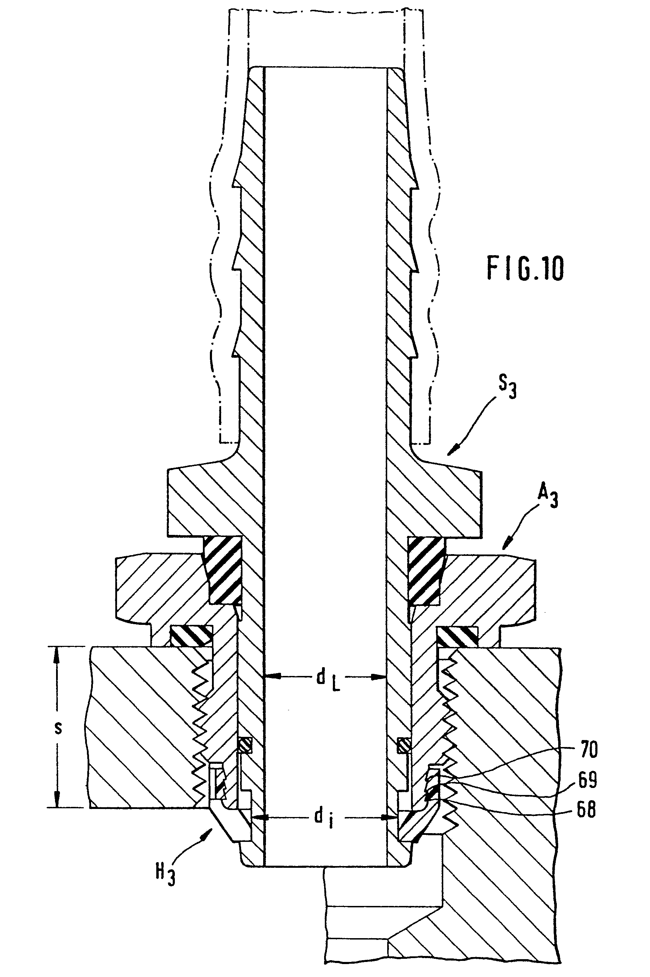

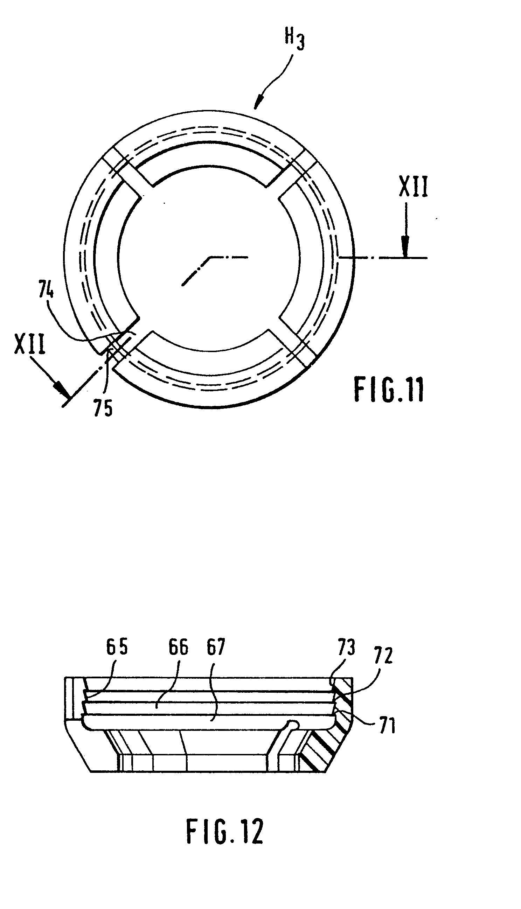

Bei der Ausführungsform nach den Fig. 10 bis 12 sind die Hauptteile mit $S_3$, $A_3$ und $H_3$ bezeichnet. Diese Ausführungsform unterscheidet sich von den Ausführungsformen nach den Fig. 4 bis 9 wiederum durch die Befestigung des Halteringes $H_3$. Der Haltering $H_3$ hat an seiner Innenseite drei Rillen 65, 66 und 67. Die Rillen bilden zusammen ein sägezahnartiges Profil, das so orientiert ist, daß sich der Haltering $H_3$ auf das Aufnahmeteil $A_3$ aufschieben läßt, daß jedoch das Abziehen erschwert oder ohne Auftrennung des Halteringes $H_3$ überhaupt nicht möglich ist.

Am Aufnahmeteil befinden sich ebenfalls Rillen 68, 69 und 70, die mit den Vorsprüngen 71, 72 und 73 korrespondieren, die sich am Halteteil zwischen den Rillen 65, 66 und 67 befinden. Diese Vorsprünge wirken wie Widerhaken, die sich in den Rillen 68, 69 und 70 verkrallen.

Der Haltering $H_3$ ist vor und nach der Montage vollständig geschlossen. Im Bereich eines radialen Spaltes 74 befindet sich ein geschwächter Verbindungssteg 75, der als Sollbruchstelle ausgebildet ist. Wenn ein Abnehmen des Halteringes erforderlich wird, wird der Ring durch Zerbrechen des geschwächten Steges 75 aufgetrennt, wodurch sich der Haltering so weit aufweiten läßt, daß er entfernt werden kann. Danach ist eine weitere Verwendung des Halteringes nicht mehr möglich, wenn die Rillen 68, 69 und 70 so flach sind, wie gezeichnet. Die Abstützung des Halteringes $H_3$ an der Bohrungswand reicht nämlich dann nicht mehr aus, um die Vorsprünge 71, 72, 73 mit den Rillen 68, 69, 70 sicher im Eingriff zu halten.

Auch die Ausführungsform nach den Fig. 10 bis 12 bringt eine relativ große lichte Weite $d_L$, da durch die Verteilung der axialen Haltekraft über mehrere Rillen 68, 69, 70 diese sehr flach ausgebildet werden können.

## Patentansprüche

1. Kupplung für eine Druckleitung, insbesondere für den Anschluß von Druckluftleitungen (6) an Organe einer Druckluftbremse eines Kraftfahrzeuges, mit einem Steckteil (1; $S_1$; $S_2$; $S_3$) mit Durchgangsbohrung (17), einem Aufnahmeteil (2; $A_1$; $A_2$; $A_3$) mit Durchgangsbohrung (11) und Außengewinde (19), das in ein Gewindeloch (42) einschraubbar ist und einem elastisch spreizbaren, am Aufnahmeteil (2; $A_1$; $A_2$; $A_3$) angeordneten und in axialer Richtung formschlüssig an diesem fixierten Haltering (3; $H_1$; $H_2$; $H_3$), der in eine Außennut (14) des Steckteiles (1; $S_1$; $S_2$; $S_3$) eingreift und dadurch diese Teile in axialer Richtung relativ zueinander fixiert, dadurch gekennzeichnet, daß der Haltering (3; $H_1$; $H_2$; $H_3$), gesehen in Einsteckrichtung, am vorderen Ende des Aufnahmeteiles (2; $A_1$; $A_2$; $A_3$) angeordnet ist, mit einem Haltebereich (29) von außen auf einem gewindelosen, rohrförmigen Fortsatz am vorderen Ende des Einschraubbereichs (18) befestigt ist, wobei sein Verriegelungsbereich (31) das freie Ende (27) des Fortsatzes übergreift und radial nach innen über den Rand der Aufnahmebohrung (11) derart hinaussteht, daß er in gekuppeltem Zustand in eine Außennut (14) am vorderen Ende des Steckteiles (1; $S_1$; $S_2$; $S_3$) eingreift.

2. Kupplung nach Anspruch 1, dadurch gekennzeichnet, daß der Haltering (3) in eine Außennut (26) des Aufnahmeteiles (2) eingreift (Fig. 1 bis 3).

3. Kupplung nach Anspruch 1, dadurch gekennzeichnet, daß der Haltering ($H_1$; $H_2$) am Haltebereich, einzelne Vorsprünge (55—57; 60—63) aufweist, die in Vertiefungen (59; 64) des rohrförmigen Fortsatzes des Aufnahmeteiles ($A_1$; $A_2$) eingreifen.

4. Kupplung nach Anspruch 3, dadurch gekennzeichnet, daß die Vertiefungen Bohrungen (59) sind, die die Wand des rohrförmigen Fortsatzes des Aufnahmeteiles ($A_1$) vorzugsweise vollständig durchgreifen, z. B. vier um 90 Winkelgrade gegeneinander versetzte Bohrungen (59) (Fig. 4 bis 6).

5. Kupplung nach Anspruch 3, dadurch gekennzeichnet, daß die Vertiefungen gerade Nuten (64) und die Vorsprünge tangentiale Stege (60 bis 63) sind, z. B. vier um 90 Winkelgrade gegeneinander versetzte Stege (Fig. 7 bis 9).

6. Kupplung nach Anspruch 1, dadurch gekennzeichnet, daß der Haltebereich des Halteringes ($H_3$) in mindestens eine, vorzugsweise in mehrere Umfangsrillen (68, 69, 70) des rohrförmigen Fortsatzes des Aufnahmeteiles ($A_3$) eingreift, die ein sägezahnartiges Profil aufweisen, das so orientiert ist, daß die Rillen (68, 69, 70) gegen Abziehen des Halteringes ($H_3$) widerhakenartig wirken (Fig. 10 bis 12).

7. Kupplung nach einem der vorhergehenden Ansprüche, dadurch gekennzeichnet, daß der Durchmesserunterschied zwischen dem Innendurchmeser ($d_G$) des Gewindeloches (42) und dem Außendurchmesser ($d_H$) des Halteringes (3) kleiner ist als der Durchmesserunterschied zwischen dem Durchmesser ($d_a$) des Bereiches des Steckteiles (1), der sich zwischen vorderer Stirnfläche (16) und Außennut (14) befindet und dem Innendurchmesser ($d_i$) des Halteringes (3; $H_1$; $H_2$; $H_3$) an seinem in die Außennut (14) eingreifenden Bereich.

8. Kupplung nach Anspruch 7, dadurch gekennzeichnet, daß der Außendurchmesser ($d_H$) des Halteringes (3; $H_1$; $H_2$; $H_3$) gleich oder nur wenig kleiner ist als der Innendurchmesser ($d_G$) des Gewindeloches (42).

9. Kupplung nach einem der vorhergehenden Ansprüche, dadurch gekennzeichnet, daß, gesehen in Einsteckrichtung, am hinteren Ende des Aufnahmeteiles (2; $A_1$; $A_2$; $A_3$) eine Ausnehmung (24; 51) angeordnet ist, die eine elastische Dichtung (9; 50) aufnimmt, die an einer Schulter (8a; 53a) des Steckteiles (1; $S_1$; $S_2$; $S_3$) anliegt und im gekuppelten Zustand eine axiale Kraft auf das Steckteil (1; $S_1$; $S_2$; $S_3$) ausübt, durch die das Steckteil gegen den Haltering (3; $H_1$; $H_2$; $H_3$) gepreßt wird.

10. Kupplung nach Anspruch 9, dadurch gekennzeichnet, daß die elastische Dichtung (50) im entspannten Zustand einen rechteckigen Querschnitt aufweist und die Ausnehmung (51) einen hohlzylindrischen Abschnitt (51b) hat, in den die elastische Dichtung (50) paßt, wobei ihre Innenfläche am Steckteil ($S_1$) anliegt.

11. Kupplung nach Anspruch 10, dadurch gekennzeichnet, daß der hohlzylindrische Abschnitt (51b) in einen sich nach außen erweiternden, vorzugsweise hohlkonischen Abschnitt (51c) übergeht, an den die elastische Dichtung (50) im zusammengepreßten Zustand angelegt ist.

12. Kupplung nach einem der Ansprüche 9 bis 11, dadurch gekennzeichnet, daß die Schulter (53a) des Steckteiles ($S_1$; $S_2$; $S_3$) durch einen Bund (53) gebildet ist, der radial aus dem Aufnahmeteil ($A_1$; $A_2$; $A_3$) herausragt und z. B. als Sechskant ausgebildete Schlüsselflächen (53b) aufweist.

13. Kupplung nach einem der vorhergehenden Ansprüche, dadurch gekennzeichnet, daß am Haltering (3; $H_1$; $H_2$; $H_3$) und/oder am vorderen Ende des Steckteiles (1; $S_1$; $S_2$; $S_3$) eine Spreizfläche (31b, 15) angeordnet ist, die nach vorne hin konvergiert.

14. Kupplung nach einem der vorhergehenden Ansprüche, dadurch gekennzeichnet, daß der Haltering (3; $H_1$; $H_2$; $H_3$) einen abgekröpften Querschnitt hat, dessen Haltebereich (29) eine zylindrische Außenfläche (32) hat, deren Durchmesser ($d_H$) den Ansprüchen 7 und 8 entspricht und dessen Verriegelungsbereich (31) nach vorne zur Achse des Halteringes (3; $H_1$; $H_2$; $H_3$) konvergiert, wobei die genannten Bereiche (29, 31) über einen dünnen Einschnürungsbereich (30) miteinander verbunden sind.

15. Kupplung nach einem der vorhergehenden Ansprüche, dadurch gekennzeichnet, daß der Haltering (3; $H_1$; $H_2$) einen ihn unterbrechenden Trennschlitz (34) aufweist.

16. Kupplung nach einem der Ansprüche 1 bis 14, dadurch gekennzeichnet, daß der Haltering ($H_3$) eine Sollbruchstelle (75) aufweist, insbesondere ein Haltering ($H_3$) nach Anspruch 6.

17. Kupplung nach einem der vorhergehenden Ansprüche, dadurch gekennzeichnet, daß der Haltering (3; $H_1$; $H_2$; $H_3$) Schwächungskerben (35, 36, 37) aufweist, die seinen Verriegelungsbereich (31) in Segmente (38, 39, 40, 41) unterteilt, vorzugsweise in vier Segmente, wobei die Kerben (35, 36, 37) vorzugsweise den Verriegelungsbereich (31) samt dem im Anspruch 14 angegebenen Einschnürungsbereich (30) durchtrennen.

18. Kupplung nach einem der vorhergehenden Ansprüche, dadurch gekennzeichnet, daß der Haltering (3; $H_1$; $H_2$; $H_3$) ein Kunststoff-Spritzteil ist, z. B. aus einem Copolymer des Polymethylenoxids, wie es unter dem eingetragenen Warenzeichen Hostaform käuflich ist.

## Claims

1. A connexion for a compression pipe, in particular for joining compressed-air pipes (6) to parts of an air brake for motor vehicles, having an inserted part (1; $S_1$; $S_2$; $S_3$) with a through bore (17), a receiving part (2; $A_1$; $A_2$; $A_3$) with a through bore (11) and an external thread (19), which can be screwed into a threaded bore (42), and a resiliently expandable retaining ring (3; $H_1$; $H_2$; $H_3$), which is mounted on the receiving part (2; $A_1$; $A_2$; $A_3$) and is fixed to the latter in a positive manner in the axial direction and which engages in an external groove (14) in the inserted part (1; $S_1$; $S_2$; $S_3$) and in this wav fixes the said parts relative to one another in the axial direction, characterized in that the retaining ring (3; $H_1$; $H_2$; $H_3$), as viewed in the direction of insertion, is disposed on the front end of the receiving part (2; $A_1$; $A_2$; $A_3$) and is secured by a retaining area (29) from the outside on a tubular extension without a thread on the front end of the insertion area (18), its locking area (31) engaging over the free end (27) of the extension and projecting radially inwards beyond the edge of the receiving bore (11) in such a way that in the connected state it engages in an external groove (14) at the front end of the inserted part (1; $S_1$; $S_2$; $S_3$).

2. A connexion according to Claim 1, characterized in that the retaining ring (3) engages in an external groove (26) in the receiving part (2) (Fig. 1 to 3).

3. A connexion according to Claim 1, characterized in that in the holding area the retaining ring ($H_1$; $H_2$) has individual projections (55—57: 60—63) which engage in depressions (59; 64) in the tubular extension of the receiving part ($A_1$; $A_2$).

4. A connexion according to Claim 3, characterized in that the depressions are bores (59) which preferably pass completely through the wall of the tubular extension of the receiving part ($A_1$), for example four bores (59) offset by 90° relative to one another (Fig. 4 to 6).

5. A connexion according to Claim 3, characterized in that the depressions are straight grooves (64) and the projections are tangential flanges (60 to 63), for example four flanges offset by 90° relative to one another (Fig. 7 to 9).

6. A connexion according to Claim 1, characterized in that the retaining area of the retaining ring ($H_3$) engages in at least one peripheral groove, and preferably in a plurality of peripheral grooves (68, 69, 70) of the tubular extension of the receiving part ($A_3$), which have a serrated profile which is orientated in such a way that the grooves (68, 69, 70) counteract withdrawal of the retaining ring ($H_3$) in the manner of barbs (Fig. 10 to 12).

7. A connexion according to any one of the preceding Claims, characterized in that the difference between the internal diameter ($d_G$) of the threaded bore (42) and the external diameter ($d_H$) of the retaining ring (3) is less than the difference between the diameter ($d_a$) of the area of the inserted part (1), which is disposed between the front and face (16) and the external groove (14), and the internal diameter ($d_i$) of the retaining ring (3; $H_1$; $H_2$; $H_3$) at its area engaging in the external groove (14).

8. A connexion according to Claim 7, characterized in that the external diameter ($d_H$) of the retaining ring (3; $H_1$; $H_2$; $H_3$) is equal to or only slightly less than the internal diameter ($d_G$) of the threaded bore (42).

9. A connexion according to any one of the preceding Claims, characterized in that at the rear end of the receiving part (2; $A_1$; $A_2$; $A_3$), as viewed in the direction of insertion, a recess (24; 51) is provided which receives a resilient seal (9; 50) which bears against a shoulder (8a; 53a) of the inserted part (1; $S_1$; $S_2$; $S_3$) and in the connected state exerts an axial force upon the inserted part (1; $S_1$; $S_2$; $S_3$), by which (force) the inserted part is pressed against the retaining ring (3; $H_1$; $H_2$; $H_3$).

10. A connexion according to Claim 9, characterized in that the resilient seal (50) has a rectangular cross-section in the relaxed state and the recess (51) has a hollow cylindrical portion (51b) into which the resilient seal (50) fits, the inner surface of the latter bearing against the insertion part ($S_1$).

11. A connexion according to Claim 10, characterized in that the hollow cylindrical portion (51b) passes into a portion (51c) which increases towards the outside and preferably has an internal taper and against which the resilient seal (50) bears in the compressed state.

12. A connexion according to any one of Claims 9 to 11, characterized in that the shoulder (53a) of the inserted part ($S_1$; $S_2$; $S_3$) is formed by a collar (53) which projects radially from the receiving part ($A_1$; $A_2$; $A_3$) and has flat faces (53b) formed for example as a hexagon.

13. A connexion according to any one of the preceding Claims, characterized in that the retaining ring (3; $H_1$; $H_2$; $H_3$) and/or the front end of the inserted part (1; $S_1$; $S_2$; $S_3$) is provided with an expanding surface (31b, 15) which converges towards the front.

14. A connexion according to any one of the preceding Claims, characterized in that the retaining ring (3; $H_1$; $H_2$; $H_3$) has a cross-section bent at a right angle, the retaining area (29) of which has a cylindrical outer surface (32) whose diameter ($d_H$) corresponds to Claims 7 and 8 and the locking area (31) of which converges to the front towards the axis of the retaining ring (3; $H_1$; $H_2$; $H_3$), the said areas (29, 31) being joined to one another by way of a thin contraction area (30).

15. A connexion according to any one of the preceding Claims, characterized in that the retaining ring (3; $H_1$; $H_2$) has a dividing slot (34) interrupting it.

16. A connexion according to any one of Claims 1 to 14, characterized in that the retaining ring ($H_3$) has a predetermined breaking point (75), in particular a retaining ring ($H_3$) according to Claim 6.

17. A connexion according to any one of the preceding Claims, characterized in that the retaining ring (3; $H_1$; $H_2$; $H_3$) has weakening slots (35, 36, 37) which divide its locking area (31) into segments (38, 39, 40, 41), preferably into four segments, the slots (35, 36, 37) preferably separating the locking area (31) together with the contraction area (30) indicated in Claim 14.

18. A connexion according to any one of the preceding Claims, characterized in that the retaining ring (3; $H_1$; $H_2$; $H_3$) is an injection-moulded plastics part, for example of a copolymer of polymethylene oxide, as commercially available under the Registered Trademark »Hostaform«.

## Revendications

1. Accouplement pour une conduite sous pression, en particulier pour le raccordement de conduits d'air comprimé (6) à des organes d'un frein à air comprimé d'un véhicule à moteur, comprenant une partie d'enfichage (1; $S_1$; $S_2$; $S_3$)

qui inclut un perçage de traversée (17), une partie de réception (2; $A_1$; $A_2$; $A_3$) qui inclut un perçage de traversée (11) et un filetage extérieur (19) qui peut se visser dans un trou fileté (42), et une bague de verrouillage (3; $H_1$; $H_2$; $H_3$) pouvant être élastiquement distendue, disposée sur la partie de réception (2; $A_1$; $A_2$; $A_3$) et fixée à celle-ci grâce à sa formel, qui s'emboîte dans une rainure extérieure (14) de la partie d'enfichage (1; $S_1$; $S_2$; $S_3$) et fixe de ce fait ces parties relativement l'une avec l'autre dans la direction axiale, caractérisé en ce que la bague de verrouillage (3; $H_1$; $H_2$; $H_3$), vue dans la direction d'enfichage, est disposée à l'extrémité avant de la partie de réception (2; $A_1$; $A_2$; $A_3$), est fixée par une région d'arrêt (29) à partir de l'extérieur sur un prolongement tubulaire sans filet à l'extrémité avant de la région d'insertion à vissage (18), sa région de verrouillage (31) recouvrant l'extrémité libre (27) du prolongement et faisant saillie radialement vers l'intérieur au-delà du bord du perçage de réception (11), de façon qu'à l'état d'accouplement elle engrène dans une rainure extérieure (14), à l'extrémité avant de la partie d'enfichage (1; $S_1$; $S_2$; $S_3$).

2. Accouplement selon la revendication 1, caractérisé en ce que la bague de verrouillage (3) engrène dans une rainure extérieure (26) de la partie de réception (2) (fig. 1 à 3).

3. Accouplement selon la revendication 1, caractérisé en ce que la bague de verrouillage ($H_1$; $H_2$) comporte, dans la région d'arrêt, différentes saillies (55—57; 60—63) qui entrent dans des renfoncements (59; 64) du prolongement tubulaire de la partie de réception ($A_1$; $A_2$).

4. Accouplement selon la revendication 3, caractérisé en ce que les renfoncement sont des perçages (59), qui de préférence traversent complètement la paroi du prolongement tubulaire de la partie de réception ($A_1$), par exemple sous la forme de quatre perçages (59) décalés à 90 degrès les uns par rapport aux autres (Fig. 4 à 6).

5. Accouplement selon la revendication 3, caractérisé en ce que les renfoncements sont des rainures droites et les saillies, des membrures tangentielles (60 à 63), par exemple quatre membrures décalées à 90 degrés les unes par rapport aux autres (fig. 7 à 9).

6. Accouplement selon la revendication 1, caractérisé en ce que la région d'arrêt de la bague de verrouillage ($H_3$) engrène dans au moins une gorge périphérique et de préférence dans plusieurs de ces gorges (68, 69, 70) du prolongement tubulaire de la partie de réception ($A_3$), qui présentent un profil en dents de scie, lequel est orienté de façon que les gorges (68, 69, 70) agissent à la façon de crochets de retenue à l'encontre du détachement de la bague de verrouillage ($H_3$) (fig. 10 à 12).

7. Accouplement selon l'une des revendications précédentes, caractérisé en ce que la différence de diamètre entre le diamètre intérieur ($d_G$) du trou fileté (42) et le diamètre extérieur ($d_H$) de la bague de verrouillage (3) est plus petite que la différence de diamètre entre le diamètre ($d_a$) de la région de la partie d'enfichage (1), qui se trouve entre la surface frontale avant (16) et l'écrou extérieur (14), et le diamètre intérieur ($d_i$) de la bague de verrouillage (3; $H_1$; $H_2$; $H_3$) dans sa région engrenant dans la rainure extérieure (14).

8. Accouplement selon la revendication 7, caractérisé en ce que le diamètre extérieur ($d_H$) de la bague de verrouillage (3; $H_1$; $H_2$; $H_3$) est le même ou seulement un peu plus petit que le diamètre intérieur ($d_G$) du trou fileté (42).

9. Accouplement selon l'une des revendications précédentes, caractérisé en ce que, vu dans la direction d'enfichage, un évidement (24; 51) est disposé à l'extrémité arrière de la partie de réception (2; $A_1$; $A_2$; $A_3$), évidement qui loge un joint d'étanchéité élastique (9; 50), lequel est appliqué contre un épaulement (8a; 53a) de la partie d'enfichage (1; $S_1$; $S_2$; $S_3$) et exerce, dans l'état d'accouplement, une force axiale sur la partie d'enfichage (1; $S_1$; $S_2$; $S_3$), qui fait que la partie d'enfichage est poussée contre la bague de verrouillage (3; $H_1$; $H_2$; $H_3$).

10. Accouplement selon la revendication 9, caractérisé en ce que le joint élastique (50) présente, à l'état relaxé, une section transversale rectangulaire et que l'évidement (51) comporte une partie cylindrique creuse (51b) dans laquelle s'adapte le joint élastique (50), sa surface intérieure s'appliquant contre la partie d'enfichage ($S_1$).

11. Accouplement selon la revendication 10, caractérisé en ce que la partie cylindrique creuse (51b) se raccorde à une partie (51c) qui s'élargit vers l'extérieur et qui est de préférence conique et creuse, contre laquelle le joint d'étanchéité élastique (50) est appliqué en étant comprimé.

12. Accouplement selon l'une des revendications 9 à 11, caractérisé en ce que l'épaulement (53a) de la partie d'enfichage ($S_1$; $S_2$; $S_3$) est formé par un collet (53) qui fait saillie radialement hors de la partie de réception ($A_1$; $A_2$; $A_3$) et qui comporte des surfaces de prise de clé (53b), par exemple en forme de six pans.

13. Accouplement selon l'une des revendications précédentes, caractérisé en ce qu'une surface extensible, convergeant vers l'avant, est aménagée sur la bague de verrouillage (3; $H_1$; $H_2$; $H_3$) et/ou à l'extrémité avant de la partie d'enfichage (1; $S_1$; $S_2$; $S_3$).

14. Accouplement selon l'une des revendications précédentes, caractérisé en ce que la bague de verrouillage (3; $H_1$; $H_2$; $H_3$) a une section transversale de forme coudée, dont la région d'arrêt (29) comporte une surface extérieure cylindrique (32) de diamètre ($d_H$) correspondant aux revendications 7 et 8 et dont la région de verrouillage (31) converge vers l'avant sur l'axe de la bague de verrouillage (3; $H_1$; $H_2$; $H_3$), lesdites régions (29, 30) étant reliées entre elles par l'intermédiaire d'une mince région (3c) de rétrécissement.

15. Accouplement selon l'une des revendications précédentes, caractérisé en ce que la bague de verrouillage (3; $H_1$; $H_2$) comporte une

fente de séparation (34) qui la partage.

16. Accouplement selon l'une des revendications 1 à 14, caractérisé en ce que la bague de verrouillage comprend un emplacement (75) destiné à la rupture, en particulier une bague de verrouillage selon la revendication 6.

17. Accouplement selon l'une des revendications précédentes, caractérisé en ce que la bague de verrouillage (3; $H_1$; $H_2$; $H_3$) comporte des entailles d'affaiblissement (35, 36, 37) qui partagent sa région de verrouillage (31) en segments (38, 39, 40, 41), de préférence au nombre de quatre, les entailles (35, 36, 37) divisant conjointement de préférence la région de verrouillage (31) et la région de rétrécissement (30) citée dans la revendication 14.

18. Accouplement selon l'une des revendications précédentes, caractérisé en ce que la bague de verrouillage (3; $H_1$; $H_2$; $H_3$) est une pièce de matière synthétique obtenue par injection, par exemple en un copolymère d'oxyde de polyméthylène, existant dans le commerce sous la dénomination Hostaform enregistrée comme marque de fabrique.

FIG.1

# FIG. 2

# FIG.3

0 059 877

FIG.4

FIG.4a

15

55  H₁

FIG.5

58

VI

56

VI

57

55  56

FIG.6

FIG.7

**FIG.8**

**FIG.9**

FIG.10

$S_3$

$A_3$

$d_L$

$s$

70
69
68

$d_i$

$H_3$

H3

XII

74

XII

75

**FIG.11**

65  66  67  73  72

71

**FIG.12**